Europäisches Patentamt

European Patent Office

Office européen des brevets

(19)

(11) Numéro de publication: **0 183 578**
**B1**

(12) **FASCICULE DE BREVET EUROPEEN**

(45) Date de publication du fascicule du brevet:
22.03.89

(51) Int. Cl.⁴: **F 16 D 13/71**

(21) · Numéro de dépôt: **85401981.7**

(22) Date de dépôt: **11.10.85**

(54) Couvercle et mécanisme d'embrayage le comportant.

(30) Priorité: **26.10.84 FR 8416402**

(43) Date de publication de la demande:
**04.06.86 Bulletin 86/23**

(45) Mention de la délivrance du brevet:
**22.03.89 Bulletin 89/12**

(84) Etats contractants désignés:
**DE IT**

(56) Documents cités:
**FR-A- 2 300 933**
**FR-A- 2 351 314**
**FR-A- 2 381 938**
**FR-A- 2 381 940**
**FR-A- 2 507 719**
**GB-A- 2 142 100**

(73) Titulaire: **VALEO, 64 Avenue de la Grande Armée,
F-75017 Paris (FR)**

(72) Inventeur: **Valier, Carlo, Via Boccardi 6/4, I-10025 Pino
Torinese (Torino) (IT)**

(74) Mandataire: **CABINET BONNET-THIRION, 95 Boulevard
Beaumarchais, F-75003 Paris (FR)**

ACTORUM AG

## Description

La présente invention concerne d'une manière générale les embrayages, destinés notamment à l'équipement des véhicules automobiles, et comportant en particulier une pièce annulaire dite couvercle.

Il est déjà connu des embrayages du genre comportant un premier plateau dit plateau de pression, solidaire en rotation d'un couvercle et monté mobile axialement vis-à-vis de celui-ci, des moyens élastiques à action axiale contrôlable, qui, interposés entre ledit couvercle et ledit plateau de pression, tendent notamment à écarter ce dernier dudit couvercle, un disque de friction destiné à être couplé en rotation à un premier arbre, en général un arbre mené, et un deuxième plateau, dit plateau de réaction, destiné à être couplé en rotation à un deuxième arbre, en général un arbre menant.

Il est usuel d'assembler conjointement le couvercle, le plateau de pression et les moyens élastiques à action contrôlable interposés entre ceux-ci pour la constitution d'un ensemble unitaire appelé mécanisme d'embrayage prêt à être monté ensuite directement en tant que tel sur le plateau de réaction associé après mise en place du disque de friction.

Le montage sur le plateau de réaction s'opère en général au moyen d'organes de fixation, tels que des vis, convenablement répartis sur la périphérie externe du couvercle à la faveur de zones de fixation sensiblement radiales que présente celui-ci et devant passer naturellement à l'extérieur du plateau de pression et du disque de friction. On est conduit ainsi à des mécanismes d'embrayage du genre décrit par exemple dans le brevet FR-A 2 507 719 où le couvercle réalisé par emboutissage a un diamètre considérablement plus grand que celui du disque de friction et du plateau de pression et il en résulte une augmentation du poids, de l'inertie et de l'encombrement du mécanisme, ce qui peut être indésirable, en particulier dans les véhicules poids lourds.

On connaît, il est vrai, par le brevet FR-A 2 300 933 une technique de fabrication de mécanisme d'embrayage permettant une limitation du diamètre du couvercle à une valeur peu supérieure au diamètre du plateau de pression et du disque de friction; cette technique consiste essentiellement en un aménagement des zones de fixation sensiblement radiales du couvercle par la disposition en saillie axiale sur ces zones d'entretoises d'écartement, qui sont rapportées sur lesdites zones par exemple par soudage, chacune de ces entretoises présentant, à distance de la zone de fixation sur laquelle elle fait saillie, une portée d'appui par laquelle elle est adaptée à venir en appui radial sur le plateau de réaction associé. Cependant, cette technique à cause des entretoises, conduit au fractionnement du couvercle en un certain nombre de pièces supplémentaires, ce qui a l'inconvénient de compliquer la construction, la fabrication est difficilement mécanisable en raison de l'abondance des pièces.

La présente invention a pour objet d'échapper aux divers inconvénients sus-visés en permettant à la fois de limiter l'encombrement radial du couvercle, tout en évitant la nécessité de le fractionner.

L'invention propose à cet effet un couvercle monobloc pour mécanisme d'embrayage et un mécanisme le comportant, le dit mécanisme, notamment pour véhicule automobile, étant du genre comportant une pièce annulaire dite couvercle, un plateau dit plateau de pression, qui est attelé en rotation audit couvercle et monté mobile axialement vis-à-vis de celui-ci, et des moyens élastiques à action axiale contrôlable, qui, intervenant entre ledit couvercle et ledit plateau de pression, tendent normalement à écarter ce dernier dudit couvercle, l'ensemble ainsi constitué étant destiné à être rapporté par la périphérie externe du couvercle sur un deuxième plateau, dit plateau de réaction, pour serrage contrôlé d'un disque de friction entre lesdits plateaux, le couvercle présentant sur son pourtour une alternance de plages radiales d'attelage du plateau de pression et de zones de fixation sur le plateau de réaction, chaque zone de fixation étant constituée d'une zone axiale entretoise en regard d'une plage radiale d'appui présentant une pluralité de trous de passage d'organes de fixation, caractérisé en ce qu'au droit de la jonction de la zone entretoise et de la plage d'appui et en regard de chaque trou de passage d'organe de fixation est aménagée une fenêtre dite de pliage.

Grâce à cette disposition, il devient possible de rapprocher la zone axiale entretoise au voisinage immédiat du passage des organes de fixation. De plus, les fenêtres de pliage facilitent la mise en forme, notamment par emboutissage, du couvercle.

La zone entretoise comporte une alternance de nervures de raidissement internes et de nervures de raidissement externes portant des portées de centrage. Suivant une autre caractéristique de l'invention, les fenêtres de pliage sont aménagées dans les nervures de raidissement externes.

En pratique, chaque nervure de raidissement interne se raccorde à une nervure de raidissement externe par une portion en forme de moulure suivant une disposition avantageuse, la zone d'appui annulaire ménagée autour de chaque trou de passage des organes de fixation se raccorde à la nervure de raidissement externe et à la portion en forme de moulure par un congé d'arc-boutement. Ainsi, les trous de passage des organes de fixation peuvent être rapprochés les uns des autres tout en ayant une zone d'appui annulaire solide malgré la présence des fenêtres.

D'autres objets, caractéristiques et avantages de l'invention ressortiront d'ailleurs de la description qui va suivre à titre d'exemple non limitatif, en référence aux dessins schématiques annexés sur lesquels:

la figure 1 est une vue en coupe du couvercle selon l'invention intégré à un mécanisme d'embrayage par ailleurs connu en soi;

la figure 2 est une vue partielle en perspective d'un couvercle de mécanisme d'embrayage selon l'invention;

la figure 3 est une vue partielle, en coupe axiale selon la ligne brisée III–III de la figure 2;

la figure 4 est une vue partielle suivant la flèche IV de la figure 3;

la figure 5 est une vue partielle de face du couvercle de mécanisme d'embrayage selon l'invention.

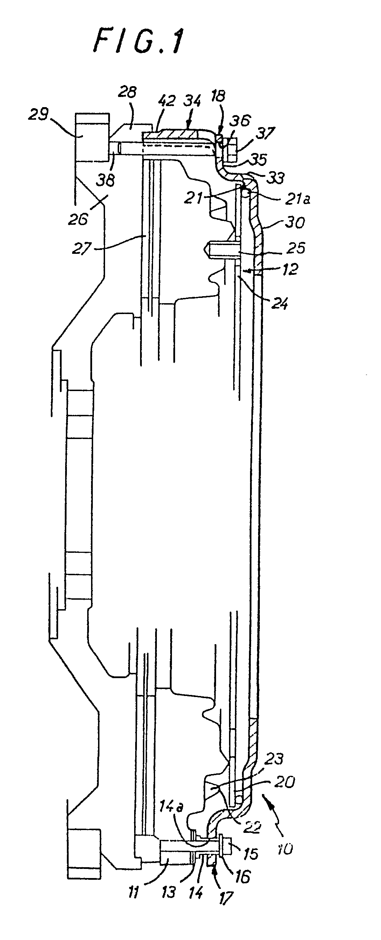

Suivant la forme de réalisation représentée à la figure 1, le mécanisme d'embrayage comporte globalement, de manière connue en soi, une première pièce annulaire 10 dite couvercle, une deuxième pièce annulaire 11 formant un plateau, dit plateau de pression, qui est solidarisé en rotation avec le couvercle 10 tout en étant mobile axialement vis-à-vis de celui-ci, et des moyens élstiques à action axiale contrôlable 12 qui sont interposés entre le couvercle 10 et le plateau de pression 11 et qui tendent normalement à écarter du fond du couvercle 10 le plateau de pression 11. Ici, le couvercle est en matériau emboutissable par exemple de la tôle.

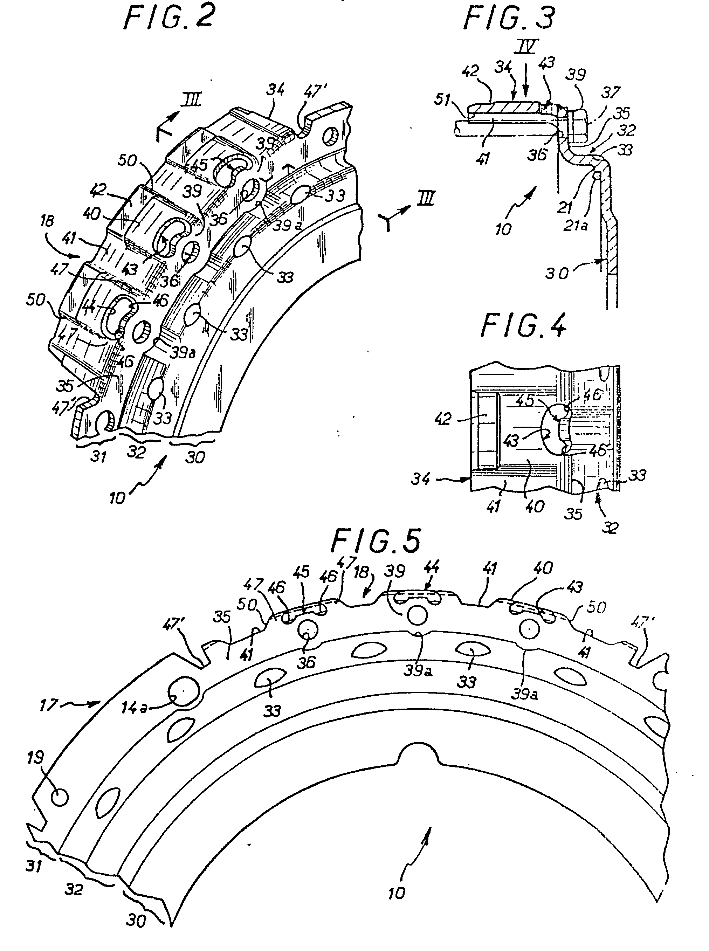

De manière connue en soi, le plateau de pression 11 est solidarisé en rotation avec le couvercle 10 au moyen de languettes tangentielles 13 qui s'étendent sensiblement tangentiellement du plateau de pression 11 au couvercle 10 en des points circulairement répartis sur ces deux pièces annulaires. Dans l'exemple représenté, ces languettes tangentielles sont assujetties au plateau de pression 11 au moyen de pièces tubulaires d'immobilisation 14 bloquées sous la tête de vis de guidage 15 vissées dans le plateau, ces têtes prenant appui sur la pièce d'immobilisation tubulaire 14 par l'intermédiaire de rondelles d'appui 16. Les pièces tubulaires d'immobilisation 14 traversent avec jeu des ouvertures 14a ménagées à cet effet dans la zone périphérique du couvercle, et plus précisément à proximité de l'une des deux extrémités circonférentielle de chacune des plages radiales d'attelage 17 qui alternent sur le pourtour du couvercle avec des zones de fixation, globalement désignées par la référence 18, sur la structure desquelles on reviendra plus en détail ci-après. On notera qu'en position de stockage, lorsque le mécanisme n'est pas rapporté sur le couvercle, les rondelles 16 par coopération avec la plage 17 limitent le mouvement axial du plateau de pression 11 en évitant une détérioration des languettes 13. Les languettes tangentielles 13 sont, d'autre part, fixées, par exemple par rivetage à la faveur d'ouvertures 19 (figure 5), à proximité de l'autre des extrémités précitées de chaque plage d'attelage 17; ces plages sont déportées en sens axial par rapport au fond 30 du couvercle en direction du plateau de pression d'une distance déterminé par une zone annulaire 32.

Dans l'exemple représenté, et de manière connue en soi, les moyens élastiques à action axiale contrôlable 12 interposés entre couvercle 10 et plateau de pression 11 comportent une pièce annulaire dite diaphragme 20 formant une rondelle élastique du type Belleville ici en appui à sa périphérie externe sur le couvercle 10 à la faveur d'une saillie axiale 21 portée de manière continue ou discontinue par le pourtour du fond 30 du couvercle. Cette rondelle est montée basculante, d'autre part, à proximité de sa périphérie interne sur l'arête 22 d'une nervure annulaire 23 du plateau de pression.

La pièce annulaire 20 comporte, par ailleurs, en direction de l'axe de l'ensemble, des prolongements radiaux 24 séparés par des fentes formant des doigts de débrayage. La référence 25 désigne un pion de centrage du diaphragme sur le plateau de pression 11, ce pion se plaçant entre deux doigts 24 à la racine de ceux-ci de manière connue en soi.

Un tel ensemble unitaire est destiné à être rapporté sur un plateau de réaction 26 pour serrage d'un disque de friction 27 entre ce plateau de réaction et le plateau de pression 11.

Un tel plateau de réaction 26, qui est, en général, destiné à être solidarisé en rotation à un arbre menant, et le disque de friction 27 associé qui est, en général, destiné à être solidarisé en rotation à un arbre mené, n'ont été que succinctement schématisés à la figure 1; ces pièces sont, en effet, bien connues par elles-mêmes et ne faisant pas partie de l'invention, elles ne seront pas décrites en détail. Il suffira de noter que le plateau de réaction 26 présente ici à sa périphérie un prolongement axial 28 en regard du mécanisme intervenant directement dans le centrage du mécanisme d'embrayage. Ce prolongement sert également, de manière usuelle, de support pour une couronne de démarrage 29.

En revenant maintenant de manière plus détaillée sur la structure du couvercle 10 selon l'invention (cf figures 2 à 5) on note que le couvercle comporte, de part et d'autre de la zone annulaire axiale 32, le fond annulaire 30, et une partie périphérique d'orientation radiale 31 décalée en sens axial en direction du plateau de pression (figures 2 et 5).

La zone annulaire axiale 32, qui détermine ce décalage, présente à l'endroit de sa jonction avec le fond annulaire 30 une série d'emboutissages localisés 33, obtenus par des coups de poinçon adaptés, de manière connue en soi, à former sur la face interne du couvercle une série de saillies axiales 21, qui sont destinées à centrer un jonc d'appui 21a pour le bord périphérique du diaphragme.

La partie périphérique 31 présente une alternance de zones de fixation 18 et de plages d'attelage 17.

Dans chaque zone de fixation 18, une zone entretoise 34 d'orientation axiale destinée à coopérer par emboîtement avec le prolongement axial périphérique 28 du plateau de réaction 26, pour appui et centrage sur le plateau de réaction se raccorde à une plage radiale 35, dite plage d'appui.

La plage radiale d'appui 35 présente des trous 36 destinés à permettre chacun le passage d'un organe de fixation tel qu'une vis 37 adaptée à se fixer dans un alésage taraudé correspondant 38 (figure 1) du plateau de réaction 26.

Autour de chacun de ces trous 36, il est ménagé sur la plage radiale 35 une zone d'appui annulaire 39 pour la tête des organes de fixation. Cette zone d'appui annulaire 39 est notamment obtenue à la faveur d'une partie en creux 39a ménagée dans la zone annulaire axiale 32. On notera que ces parties en creux 39a alternent circonférentiellement avec les emboutissages localisés 33, ceux-ci étant radialement situés au-delà des saillies 21. Chaque zone entretoise 34 comporte des nervures de raidissement 41 d'orientation générale axiale, déportées radialement vers l'intérieur entre les passages d'organes de fixation, en alternance avec des nervures de raidissement 40 d'orientation générale axiale situées radialement vers l'extérieur en regard de ces passages tout en les contournant au plus près.

Par commodité la nervure de raidissement 41 sera dénommée nervure de raidissement interne et la nervure de raidissement 40 nervure de raidissement externe du fait qu'elle est située radialement plus à l'extérieur que la nervure 41. Les nervures de raidissement externes 40 ont une étendue circonférentielle plus grande que les nervures de raidissement internes 41.

Les nervures de raidissement internes 41 se raccordent aux nervures de raidessement externes 40 par des portions 50 en forme de moulure; le raccordement de la zone d'appui annulaire 39 sur la nervure de raidissement externe 40 et la portion 50 s'effectue par une zone d'arc-boutement 47 dite congé d'arc-boutement formant moyen de raidissement.

Les deux extrémités circonférentielles de la zone entretoise 34 se raccordent par des dégagements d'extrémité 47' (figures 2 et 5) aux plages d'attelage 17 adjacentes. En pratique, les plages 17 et les plages radiales d'appui 35 sont dans le même plan transversal. Bien entendu, ces deux plages 17 et 35 peuvent être décalées axialement.

Le centrage du couvercle par rapport au plateau de réaction est assuré par des portées de centrage telles que 42 usinées sur les parties terminales des nervures de raidissement externes 40 de la zone entretoise 34, pour coopération par emboîtement (cf figure 1) avec la portée cylindrique offerte par le prolongement axial 28 du plateau de réaction 26. On notera que la partie terminale de la zone entretoise 34 s'appuie sur le plateau de réaction 26.

Au droit de la jonction de la zone entretoise 34 et de la plage d'appui 35 et en regard de chaque trou 36, est aménagée une fenêtre dite de pliage 43. En pratique, les fenêtres de pliage 43 sont ménagées dans la nervure de raidissement externe 40, qui porte par ailleurs les portées de centrage, et l'étendue circonférentielle desdites fenêtres de pliage est ici moindre que celle des nervures de raidissement externes 40.

Cette fenêtre 43 présente, d'une part, dans la nervure de raidissement externe 40 un bord 44 de forme sensiblement concave, d'autre part, dans la zone d'appui annulaire 39 un bord plan ou convexe 45 se raccordant au bord 44 par deux parties 46, d'allure générale concave de rayon réduit, situées dans la zone d'arc-boutement 47 et dont la tranche a subi un vrillage lors du pliage. La fenêtre ainsi décrite présente donc une forme de «haricot».

Il est à noter que le bord plan ou convexe 45 est situé radialement à un niveau voisin de celui de la face interne 51 de la nervure de raidissement externe 40 et au plus à un niveau radialement situé dans l'épaisseur de la nervure de raidissement externe 40. Ainsi un planage de la zone d'appui annulaire 39 reste aisé malgré l'aplomb de la zone d'appui annulaire 39 avec la nervure de raidissement externe 40 comme décrit ci-dessus.

Ainsi, de par leur situation, ces fenêtres facilitent, lors de la fabrication par emboutissage du couvercle, le pliage de la zone entretoise 34, sans risque de formation d'un bourrelet de matière au droit des passages d'organes de fixation vu l'absence de matière à cet endroit là. Il est ainsi possible de rapprocher au maximum les zones entretoises 34 des passages des organes de fixation 37 et donc de la périphérie externe du disque de friction 27 et du plateau de pression 11 et de ce fait de diminuer l'encombrement radial d'un tel couvercle 10 tout en conservant une zone d'appui annulaire 39 satisfaisante pour les organes de fixation.

En effet, grâce à la forme avantageuse en «haricot» des fenêtres 43 et notamment grâce aux congés d'arc-boutement 47, un arc-boutement de la zone d'appui annulaire 39 est assuré pour les forces axiales s'exerçant sur la zone d'appui annulaire 39 vers la zone entretoise 34; ainsi la zone d'appui annulaire est renforcée. On appréciera qu'il est possible d'avoir des ouvertures 36 très proches les unes des autres, ce qui permet d'avoir un serrage important du couvercle sur le plateau de pression et donc de réaliser un embrayage à forte tansmission de couple, tout en ayant une zone entretoise la plus proche possible des organes de fixation et des zones d'appui annulaires solides malgré la faible profondeur existant en pratique entre les nervures de raidissement externe 40 et interne 41 et malgré la présence des fenêtres 43.

Il est à noter que lors de la conception d'une telle structure de couvercle il a été nécessaire de surmonter le préjugé qui voulait qu'une zone dè pliage ne présente pas d'évidements susceptibles de la fragiliser. En effet, ici, tout en utilisant l'avantage d'une fenêtre dans la zone de pliage, ce qui permet une diminution de l'encombrement radial du couvercle, on a réussi à renforcer cette zone de pliage par la forme avantageuse de la fenêtre elle-même, ce qui a priori n'était pas évident.

Bien entendu, la présente invention n'est pas limitée au mode de réalisation choisi, il est possible d'envisager d'autres variantes sans sortir du cadre de l'invention, notamment en ce qui concerne la dimension et le nombre des fenêtres de pliage. En particulier, les fenêtres 43 peuvent être plus étendues circonférentiellement que les nervures externes 40 et déborder dans les portions 50, il en est ainsi par exemple lorsque, à dimension égale, les zones 50 sont plus étendues circonférentiellement et les nervures 40 moins. Dans tous les cas, les fenêtres 43 s'étendent au moins en partie dans la nervure de raidissement externe 40. En variante, le joint d'appui du diaphragme sur le couvercle peut être réalisé sous la forme d'un simple bourrelet.

## Revendications

1. Couvercle monobloc pour mécanisme d'embrayage, notamment pour véhicule automobile, avec sur son pourtour une alternance de plages radiales d'attelage (17) à un plateau de pression (11) et de zones de fixation (18) sur un plateau de réaction (26), chaque zone de fixation comportant une zone axiale entretoise (34) en regard d'une plage radiale d'appui (35) et présentant une pluralité de trous (36) de passage d'organes de fixation (37), caractérisé en ce qu'au droit de la jonction de la zone entretoise (34) et de la plage d'appui (35) et en regard de chaque trou (36) de passage d'organe de fixation est aménagée une fenêtre dite de pliage (43).

2. Couvercle monobloc pour mécanisme d'embrayage selon la revendication 1, dans lequel la zone entretoise (34) comporte une alternance de nervures de raidissement internes (41) et de nervures de raidissement externes 40 portant des portées de centrage, caractérisé en ce que la fenêtre de pliage (43) est aménagée au moins en partie dans la nervure de raidissement externe (40).

3. Couvercle monobloc pour mécanisme d'embrayage selon les revendications 1 ou 2, dans lequel la plage radiale d'appui (35) possède des zones d'appui annulaire (39) autour de chaque trou (36) de passage des organes de fixation et dans lequel chaque nervure de raidissement interne (41) se raccorde à une nervure de raidissement externe (40) par une portion en forme de moulure (50), caractérisé en ce que la zone d'appui annulaire (39) se raccorde à la nervure de raidissement externe (40) et à la portion (50) en forme de moulure par une zone d'arc-boutement (47), dite congé d'arc-boutement, formant moyen de raidissement.

4. Couvercle monobloc pour mécanisme d'embrayage selon l'une quelconque des revendications précédentes, caractérisé en ce que les fenêtres de pliage (43) présentent une forme en «haricot» avec, dans la zone annulaire d'appui (39) ménagée autour de chaque trou (36), un bord plan ou convexe (45).

5. Couvercle monobloc pour mécanisme d'embrayage selon la revendication 4, caractérisé en ce que le bord (45) est situé radialement à un niveau voisin de celui de la surface interne (51) de la nervure de raidissement externe (40).

6. Couvercle monobloc pour mécanisme d'embrayage selon la revendication 4, caractérisé en ce que le bord (45) est situé radialement dans l'épaisseur de la nervure de raidissement externe (40).

7. Couvercle monobloc pour mécanisme d'embrayage selon les revendications 4 à 6, caractérisé en ce que le bord plan ou convexe (45) se raccorde au bord (44), que présente la fenêtre de pliage (43) dans la nervure de raidissement externe (40), par deux zones (46) d'allure générale concave de rayon réduit situées dans la zone d'arc-boutement.

8. Couvercle monobloc pour mécanisme d'embrayage selon la revendication 7, caractérisé en ce que la tranche des zones (46) est vrillée.

9. Mécanisme d'embrayage comportant un couvercle monobloc (10) selon les revendications 1 à 3, ledit mécanisme comportant en outre un plateau dit plateau de pression (11) qui est attelé en rotation audit couvercle et monté mobile axialement vis-à-vis de celui-ci, et des moyens élastiques à action axiale (12) qui intervenant entre ledit couvercle et ledit plateau de pression tendent normalement à écarter ce dernier dudit couvercle, l'ensemble ainsi constitué étant destiné à être rapporté par la périphérie du couvercle sur un deuxième plateau (26) dit plateau de réaction, pour serrage contrôlé du disque de friction (27) entre lesdits plateaux, caractérisé en ce que des moyens de raidissement (40, 41) ménagés dans la zone axiale entretoise (34) forment arc-boutement autour de fenêtres de pliage (43) ménagées en regard de chaque trou (36) de passage d'organe de fixation.

## Patentansprüche

1. Einblock-Deckel für Kupplungsmechanismus, insbesondere für Kraftfahrzeuge, an dessen Umfang abwechselnd radiale Ankupplungsflächen (17) an eine Druckplatte (11) und Befestigungszonen (18) an einer Gegendruckplatte (26) vorgesehen sind, wobei jede Befestigungszone eine axiale Zwischenzone (34) gegenüber einer radialen Stützfläche (35) sowie eine Vielzahl von Löchern (36) für den Durchtritt von Befestigungsorganen (37) aufweist, dadurch gekennzeichnet, dass an der Verbindungsstelle von Zwischenzone (34) und Stützfläche (35) und gegenüber jedes einzelnen Lochs (36) für den Durchtritt von Befestigungsorganen ein sogenanntes Klappfenster (43) angebracht ist.

2. Einblock-Deckel für Kupplungsmechanismus gemäss Anspruch 1, bei dem die Zwischenzone (34) abwechselnd innenliegende Verstärkungsrippen (41) und aussenliegende Verstärkungsrippen (40) mit Zentrierbereichen aufweist, dadurch gekennzeichnet, dass das Klappfenster (43) wenigstens teilweise in der aussenliegenden Verstärkungsrippe (40), vorgesehen ist.

3. Einblock-Deckel für Kupplungsmechanismus gemäss den Ansprüchen 1 oder 2, bei dem die radiale Stützfläche (35) ringförmige Stützzonen (39) rund um jedes Loch (36) für den Durchtritt von Befestigungsorganen besitzt und worin jede innenliegende Verstärkungsrippe (41) mit einer aussenliegenden Verstärkungsrippe (40) durch einen stegförmigen Abschnitt (50) verbunden ist, dadurch gekennzeichnet, dass die ringförmige Stützzone (39) mit der aussenliegenden Verstärkungsrippe (40) und dem stegförmigen Abschnitt (50) durch eine Strebebogenzone (47), die sogenannte Strebebogenkehle, als Versteifungselement verbunden ist.

4. Einblock-Deckel für Kupplungsmechanismus gemäss einem der vorangegangenen Ansprüche, dadurch gekennzeichnet, dass die Klappfenster (43) eine «Bohnenform» aufweisen und dass in der rund um jedes Loch (36) vorgesehenen ringförmigen Stützzone (39) ein flacher oder konvexer Rand (45) angebracht ist.

5. Einblock-Deckel für Kupplungsmechanismus gemäss Anspruch 4, dadurch gekennzeichnet, dass der Rand (45) in radialer Richtung etwa in Höhe der Innenfläche (51) der aussenliegenden Verstärkungsrippe (40) liegt.

6. Einblock-Deckel für Kupplungsmechanismus gemäss Anspruch 4, dadurch gekennzeichnet, dass der Rand (45) in radialer Richtung in der Dicke der aussenliegenden Verstärkungsrippe (40) liegt.

7. Einblock-Deckel für Kupplungsmechanismus gemäss den Ansprüchen 4 bis 6, dadurch gekennzeichnet, dass der flache oder konvexe Rand (45) mit dem Rand (44) verbunden ist, den das Klappfenster (43) in der aussenliegenden Verstärkungsrippe (40) aufweist, und zwar durch zwei Zonen (46) von allgemein konkaver Ausbildung und mit einem reduzierten Halbmesser, die innerhalb der Strebebogenzone liegen.

8. Einblock-Deckel für Kupplungsmechanismus gemäss Anspruch 7, dadurch gekennzeichnet, dass die Schnittfläche (tranche) der Zonen (46) verwunden (vrillée) ist.

9. Kupplungsmechanismus mit einem Einblock-Deckel (10) gemäss den Ansprüchen 1 bis 3, wobei dieser Mechanismus ausserdem eine sogenannte Druckplatte (11) enthält, die drehbar am genannten Deckel befestigt und in axialer Richtung diesem gegenüber beweglich angebracht ist, sowie elastische Vorrichtungen für axiale Wirkung (12),die zwischen dem genannten Deckel und der genannten Druckfläche wirksam werden und normalerweise die Tendenz haben, die Druckplatte vom genannten Deckel zu entfernen, wobei diese gesamte Einheit dazu bestimmt ist, am Deckelumfang auf einer zweiten Platte (26), der sogenannten Gegendruckplatte, aufzuliegen, um dazwischen auf kontrollierte Weise die Reibscheibe (27) einzuklemmen, dadurch gekennzeichnet, dass in der axialen Zwischenzone (34) vorgesehene Verstärkungselemente (40, 41) rund um die Klappfenster (43), die gegenüber jedes Lochs (36) für den Durchtritt von Befestigungsorganen angebracht sind, einen Strebebogen bilden.

## Claims

1. A single-piece clutch cover, particularly for motor vehicles, having on its periphery radial areas (17) for coupling it to a pressure plate (11), alternating with zones (18) for fixing it to a reaction plate (26), each fixing zone comprising an axial spacer zone (34) opposite a radial bearing area (35) and having a plurality of holes (36) for the passage of fixing members (37), characterised in that a window known as a bending window (43) is disposed to the right of the junction of the spacer zone (34) and the bearing area (35) and opposite each hole (36) for the passage of fixing members.

2. A single-piece clutch cover according to claim 1, wherein the spacer zone (34) comprises inner stiffening ribs (41) alternating with outer stiffening ribs (40) having centring hearing surfaces, characterised in that the bending window (43) is disposed at least partly in the outer stiffening rib (40).

3. A single-piece clutch cover according to claim 1 or 2, wherein the radial bearing area (35) has annular bearing zones (39) around each hole (36) for the passage of fixing members, and each inner stiffening rib (41) is connected to an outer stiffening rib (40) by a moulded portion (50), characterised in that the annular bearing zone (39) is connected to the outer stiffening rib (40) and to the moulded portion (50) by a bracing zone (47) known as a bracing curve, and forming stiffening means.

4. A single-piece clutch cover according to any of the preceding claims, characterised in that the bending windows (43) are «kidney»-shaped, having, in the annular hearing zone (39) disposed around each hole (36), a flat or convex edge (45).

5. A single-piece clutch cover according to claim 4, characterised in that the edge (45) is radially aligned with the inner surface (51) of the outer stiffening rib (40).

6. A single-piece clutch cover according to claim 4, characterised in that the edge (45) is disposed radially within the thickness of the outer stiffening rib (40).

7. A single-piece clutch cover according to claims 4 to 6, characterised in that the flat or convex edge (45) is connected to the edge (44) of the bending window (43) in the outer stiffening rib (40), by two generally concave zones (46) of reduced radius disposed in the bracing zone.

8. A single-piece clutch cover according to claim 7, characterised in that the edge of the zones (46) is twisted.

9. A clutch comprising a single-piece cover (10) according to claims 1 to 3, said clutch moreover comprising a plate known as a pressure plate (11) fixed to rotate with the sais cover and mounted such that it is axially movable with respect to the latter, and axially acting resilient means (12) which, operating between said cover and said pressure plate, usually tend to urge the latter away from said cover, the assembly thus formed being adapted to be attached, by means of the periphery of the cover, to a second plate (26), known as a reaction plate, so that the friction disc (27) is clamped in a controlled manner between said plates, characterised in that stiffening means (40, 41) provided in the axial spacer zone (34) form a bracing curve around bending windows (43) provided opposite each hole (36) for the passage of fixing members.

# FIG.1

FIG.2

FIG.3

FIG.4

FIG.5